# EUROPEAN PATENT APPLICATION

(11) **EP 4 826 841 A1**
(43) Date of publication of application: **21.10.2026**
(21) Application number: 24927989.4
(22) Date of filing: 01.08.2024
(51) Int. Cl.: H01M 10/613

(54) **HEAT EXCHANGE ASSEMBLY, BOX BODY, BATTERY AND ELECTRICAL DEVICE**

(30) Priority: 06.03.2024 CN 202410256856
(71) Applicant: Contemporary Amperex Technology Co., Limited, Ningde, Fujian 352100 (CN)
(72) Inventor: HOU, Yuepan, Ningde, Fujian 352100 (CN); ZHANG, Daowei, Ningde, Fujian 352100 (CN); WANG, Zhixiong, Ningde, Fujian 352100 (CN); RUAN, Danxia, Ningde, Fujian 352100 (CN)
(74) Representative: Kraus & Lederer PartGmbB
(86) International application number: PCT/CN2024/109294
(87) International publication number: WO 2025/185056

(57) **Abstract**

The present application provides a heat exchange assembly (13), a box body (10), a battery (100) and an electrical device. A heat exchange flow channel (133) is formed in the heat exchange assembly (13). The heat exchange assembly (13) comprises a first plate body (131) and a second plate body (132), the first plate body (131) comprising a first connecting layer member (1311), and the second plate body (132) comprising a reinforcing layer member (1321) and a second connecting layer member (1322). The reinforcing layer member (1321) and the second connecting layer member (1322) are stacked and connected to each other. The second connecting layer member (1322) and the first connecting layer member (1311) are stacked and hermetically connected to each other, so as to close the heat exchange flow channel (133).

## Description

### CROSS REFERENCE

The present application makes reference to Chinese Patent Application No. 202410256856.9 filed on March 6, 2024 and entitled "Heat Exchange Assembly, Box Body, Battery and Electric Device", which is incorporated herein by reference in its entirety.

### TECHNICAL FIELD

The present application relates to the technical field of batteries, and in particular, to a heat exchange assembly, a box body, a battery and an electric device.

### BACKGROUND

Energy conservation and emission reduction are the key to the sustainable development of the automotive industry, and electric vehicles have become an important component of the sustainable development of the automotive industry due to energy saving and environment protection advantages thereof. For electric vehicles, battery technology is an important factor for the development thereof.

A heat exchange assembly in a battery is configured to circulate a heat exchange medium, to adjust a temperature of the battery. However, due to the low structural strength of the heat exchange assembly, the heat exchange assembly is prone to deformation under the action of an external force.

### SUMMARY

One of the objectives of the embodiments of the present application lies in that: Provided are a heat exchange assembly, a box body, a battery and an electric device, aiming to solve the technical problem of low structural strength of the heat exchange assembly in the related art.

To solve the above technical problem, an embodiment of the present application adopts the technical solutions: A heat exchange assembly is provided, where a heat exchange flow channel is formed in the heat exchange assembly, and the heat exchange assembly includes:
a first plate body, including a first connecting layer member; and
a second plate body, including a reinforcing layer member and a second connecting layer member, where the reinforcing layer member and the second connecting layer member are stacked and connected to each other, and the second connecting layer member and the first connecting layer member are stacked and hermetically connected to each other, so as to close the heat exchange flow channel.

The heat exchange assembly provided by the embodiment of the present application has the following beneficial effects: In a case where the reinforcing layer member is disposed on the second plate body of the heat exchange assembly provided by the embodiments of the present application, the reinforcing layer member and the second connecting layer member are stacked and connected to each other, and the second connecting layer member is connected to the first connecting layer member, the reinforcing layer member may provide an additional supporting force for the entire heat exchange assembly to resist an external force, thereby effectively improving the structural strength of the heat exchange assembly and effectively reducing the risk of deformation of the heat exchange assembly.

In some embodiments of the present application, the first connecting layer member is welded to the second connecting layer member.

By adopting the above technical solution, the connection process of the first plate body and the second plate body is effectively simplified, thereby effectively improving the production efficiency of the heat exchange assembly.

In some embodiments of the present application, the first connecting layer member includes a first layer body and a second layer body that are stacked and connected, the second layer body is welded to the second connecting layer member, and a melting point of the second layer body is lower than a melting point of the first layer body.

By adopting the above technical solution, the first connecting layer member can be better adapted to the welding temperature, thereby effectively improving the welding effect between the first plate body and the second plate body.

In some embodiments of the present application, the first layer body is a 3-series aluminum layer body or a 1-series aluminum layer body, and the second layer body is a 4-series aluminum layer body.

By adopting the above technical solution, the first connecting layer member can be better adapted to the welding temperature, thereby further improving the welding effect between the first plate body and the second plate body.

In some embodiments of the present application, the first layer body has a thickness of 0.1 mm to 0.85 mm.

By adopting the above technical solution, the risk of the first connecting layer member being welded through is effectively reduced.

In some embodiments of the present application, the second layer body has a thickness of 0.05 mm to 0.1 mm.

By adopting the above technical solution, the requirement of the penetration depth required for welding the first plate body and the second plate body may be met, thereby effectively improving the welding effect between the first plate body and the second plate body.

In some embodiments of the present application, the second connecting layer member includes a third layer body and a fourth layer body that are stacked and connected, the fourth layer body is welded to the first connecting layer member, and a melting point of the fourth layer body is lower than a melting point of the third layer body.

By adopting the above technical solution, the second connecting layer member can be better adapted to the welding temperature, thereby effectively improving the welding effect between the first plate body and the second plate body.

In some embodiments of the present application, the third layer body is a 3-series aluminum layer body or a 1-series aluminum layer body, and the fourth layer body is a 4-series aluminum layer body.

By adopting the above technical solution, the second connecting layer member can be better adapted to the welding temperature, thereby further improving the welding effect between the first plate body and the second plate body.

In some embodiments of the present application, the third layer body has a thickness of 0.1 mm to 0.85 mm.

By adopting the above technical solution, the risk of the second connecting layer member being welded through is effectively reduced, thereby effectively reducing the risk of the reinforcing layer member being in contact with the heat exchange medium, and effectively improving the situation that the reinforcing layer member is corroded.

In some embodiments of the present application, the fourth layer body has a thickness of 0.05 mm to 0.1 mm.

By adopting the above technical solution, the requirement of the penetration depth required for welding the first plate body and the second plate body may be met, thereby effectively improving the welding effect between the first plate body and the second plate body.

In some embodiments of the present application, the reinforcing layer member includes at least one of a stainless steel layer member, a carbon steel layer member, a 5-series aluminum layer member, a 6-series aluminum layer member and a 7-series aluminum layer member.

By adopting the above technical solution, the heat exchange assembly may meet the requirements of yield strength and tensile strength, thereby further reducing the risk of deformation of the heat exchange assembly.

In some embodiments of the present application, the reinforcing layer member has a thickness of 0.1 mm to 0.8 mm.

By adopting the above technical solution, the weight and volume of the heat exchange assembly may be optimized in a case where the heat exchange assembly meets the strength requirements, thereby effectively improving the energy density of the battery adopting the above heat exchange assembly.

In some embodiments of the present application, a first anti-corrosion layer is disposed on a surface, facing the second plate body, of the first plate body; and/or, a second anti-corrosion layer is disposed on a surface, facing the first plate body, of the second plate body.

By adopting the above technical solution, the risk of the first plate body and the second plate body contacting the heat exchange medium is effectively reduced, thereby effectively improving the situation that the first plate body and the second plate body are corroded by the heat exchange medium.

In some embodiments of the present application, a first heat-resistant layer is provided on a surface of the first plate body facing the second plate body; and/or a second heat-resistant layer is disposed on the surface, facing the first plate body, of the second plate body.

By adopting the above technical solution, in a case where the first plate body and the second plate body are welded, heat may be blocked from being transferred from the surface of the first plate body facing the second plate body to each layer structure of the first plate body and from the surface of the second plate body facing the first plate body to each layer structure of the second plate body, thereby effectively improving the thermal expansion of the first plate body and the second plate body, and effectively reducing the risk of delamination of the first plate body and the second plate body.

In some embodiments of the present application, the heat exchange flow channel has a depth of 3 mm to 3.5 mm.

By adopting the above technical solution, the risk of cracking of the heat exchange assembly during the molding process of the heat exchange flow channel is effectively reduced.

In some embodiments in the present application, the heat exchange flow channel has a width of 3 mm to 5 mm.

By adopting the above technical solution, the risk of cracking of the heat exchange assembly during the molding process of the heat exchange flow channel is effectively reduced.

In some embodiments of the present application, a wall body of the heat exchange flow channel has a corner portion, and the corner portion is of a rounded corner structure.

By adopting the above technical solution, the stress borne by the heat exchange assembly during the molding process of the heat exchange flow channel is effectively reduced, thereby effectively reducing the risk of cracking of the heat exchange assembly.

In some embodiments of the present application, a radius of the rounded corner structure is 2 mm to 8 mm.

By adopting the above technical solution, the risk of cracking of the heat exchange assembly during the molding process of the heat exchange flow channel is further reduced.

An embodiment of the present application further provides a box body, including a frame and the heat exchange assembly according to any one of the above embodiments, where the frame is connected to the heat exchange assembly to define an accommodating space for accommodating the battery cell.

The box body provided by the embodiment of the present application has the following beneficial effects: Since the box body provided by the embodiment of the present application adopts the heat exchange assembly according to any one of the above embodiments, the structural strength of the box body is effectively improved.

In some embodiments of the present application, the reinforcing layer member is connected to the frame.

By adopting the above technical solution, the connection strength between the heat exchange assembly and the frame is effectively improved.

In some embodiments of the present application, the reinforcing layer member is welded to the frame, and a material of the reinforcing layer member is the same as a material of the frame.

By adopting the above technical solution, not only the connection strength between the heat exchange assembly and the frame is further improved, but also the connection process between the heat exchange assembly and the frame is effectively simplified, thereby effectively improving the production efficiency of the heat exchange assembly.

In some embodiments of this application, at least a part of the reinforcing layer member extends out of an edge side of the first connecting layer member and an edge side of the second connecting layer member to form a welding portion, and a side, facing the first plate body, of the welding portion is welded to the frame.

By adopting the above technical solution, it is convenient to connect the heat exchange assembly to the frame.

An embodiment of the present application further provides a battery, including a battery cell and the box body according to any one of the above embodiments, where the battery cell is accommodated in the accommodating space, and the heat exchange assembly is configured to adjust a temperature of the battery cell.

The battery provided by the embodiment of the present application has the following beneficial effects: Since the battery provided by the embodiment of the present application adopts the box body according to any one of the above embodiments, the structural strength of the battery is effectively improved.

An embodiment of the present application further provides an electric device including the above battery.

The electric device provided by the embodiment of the present application has the following beneficial effects: Since the electric device provided by the embodiment of the present application adopts the battery, the structural strength of the electric device is effectively improved.

### BRIEF DESCRIPTION OF THE DRAWINGS

To describe technical solutions in embodiments of the present application more clearly, the following briefly describes the accompanying drawings for describing the embodiments or the exemplary technology. It is clear that the accompanying drawings described in the following are merely some embodiments of the present application. Those of ordinary skill in the art can still derive other accompanying drawings from these accompanying drawings without creative efforts.
FIG. 1 is a schematic structural diagram of a vehicle according to an embodiment of the present application;
FIG. 2 is an exploded structural schematic view of a battery according to an embodiment of the present application;
FIG. 3 is an exploded structural schematic view of a heat exchange assembly according to an embodiment of the present application;
FIG. 4 is a schematic structural diagram of a first plate body according to an embodiment of the present application;
FIG. 5 is a schematic diagram of an exploded structure of a first plate body according to another embodiment of the present application;
FIG. 6 is a top structural schematic view of a first plate body according to an embodiment of the present application;
FIG. 7 is a cross-sectional schematic view of the first plate body shown in FIG. 6 along a line A-A;
FIG. 8 is an enlarged structural schematic view of portion B of the first plate body shown in FIG. 7;
FIG. 9 is an exploded structural schematic view of a second plate body according to an embodiment of the present application;
FIG. 10 is an exploded structural schematic view of a second plate body according to another embodiment of the present application;
FIG. 11 is a top structural schematic view of a heat exchange assembly according to an embodiment of the present application; and
FIG. 12 is a cross-sectional schematic view of the heat exchange assembly shown in FIG. 11 along a line C-C.

Description of reference signs:
1000, vehicle;
100, battery;
10, box body; 11, first portion; 12, second portion; 13, heat exchange assembly; 131, first plate body; 1311, first connecting layer member; 13111, first layer body; 13112, second layer body; 132, second plate body; 1321: reinforcing layer member; 13211, welding portion; 1322, second connecting layer member; 13221, third layer body; 13222, fourth layer body; 133, heat exchange flow channel; 1331, corner portion;
20, battery cell;
200, controller; and
300, motor.

### DETAILED DESCRIPTION OF EMBODIMENTS

In order to make the objects, technical solutions and advantages of the present application clearer, the present application will be further described in detail below with reference to the drawings and embodiments. It should be understood that the specific embodiments described herein are only used to explain the present application and are not used to limit the present application.

As noted, when a component is referred to as being "fixed on" or "disposed on" another component, it may be directly or indirectly on another component. When a component is referred to as being "connected to" another component, it can be directly or indirectly connected to another component. The orientation or positional relationship indicated by the terms such as "upper", "lower", "left", and "right" is based on the orientation or positional relationship shown in the drawings, only to facilitate the description, rather than to indicate or imply that the referred device or element must have a specific orientation, be constructed and operated in a specific orientation, and therefore cannot be understood as a limitation to the present application. And those skilled in the art can understand the meanings of the terms above according to specific conditions. The terms "first" and "second" are only used for facilitating descriptive purposes, and should not be construed as indicating or implying relative importance or implicitly indicating the number of technical features. The meaning of "a plurality of" is two or more, unless otherwise specifically defined.

In the embodiments of the present application, the same reference numerals denote the same component, and a detailed description of the same component is omitted in different embodiments for the sake of brevity. It should be understood that sizes of various components, such as thickness, length, and width, in the embodiments of the present application shown in the drawings are merely illustrative and should not be construed as limiting the present application.

A battery mentioned in the embodiments of the present application refers to a single physical module including one or a plurality of battery cells to provide a higher voltage and capacity. The battery generally includes a box body for encapsulating one or more battery cells. The box body can prevent liquids or other foreign objects from affecting the charging or discharging of the battery cells to a certain extent.

In the related art, the box body usually includes a heat exchange assembly, and the heat exchange assembly is in contact with the battery cell to absorb heat generated by the battery cell or transfer heat to the battery cell, thereby realizing temperature adjustment of the battery cell. The heat exchange assembly usually includes two plate bodies, at least one of the plate bodies is provided with a heat exchange flow channel for circulating a heat exchange medium, and the heat exchange flow channel is usually formed on the plate body by a stamping process, which will cause the structural strength of the portion of the plate body provided with the heat exchange flow channel to be reduced, and the plate body is easy to deform under the action of an external force.

To reduce the risk of deformation of the heat exchange assembly, in a case where the reinforcing layer member is disposed on the second plate body of the heat exchange assembly provided by the embodiments of the present application, the reinforcing layer member and the second connecting layer member are stacked and connected to each other, and the second connecting layer member is connected to the first connecting layer member, the reinforcing layer member may provide an additional supporting force for the entire heat exchange assembly to resist an external force, thereby effectively improving the structural strength of the heat exchange assembly and effectively reducing the risk of deformation of the heat exchange assembly.

The technical solutions described in the embodiments of the present application are all applicable to various electric devices using batteries, and also applicable to other devices requiring temperature regulation, such as fuel engines, gas stoves, and boilers. The electric device may be, but is not limited to, a vehicle, a cell phone, a portable device, a notebook computer, a ship, a spacecraft, an electric toy, an electric tool, etc. The vehicle may be a fuel vehicle, a gas vehicle, or a new energy vehicle, and the new energy vehicle may be a battery electric vehicle, a hybrid vehicle, or a range-extended electric vehicle. The spacecraft includes aircrafts, rockets, space shuttles, spaceships, and the like. The electric toy includes stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

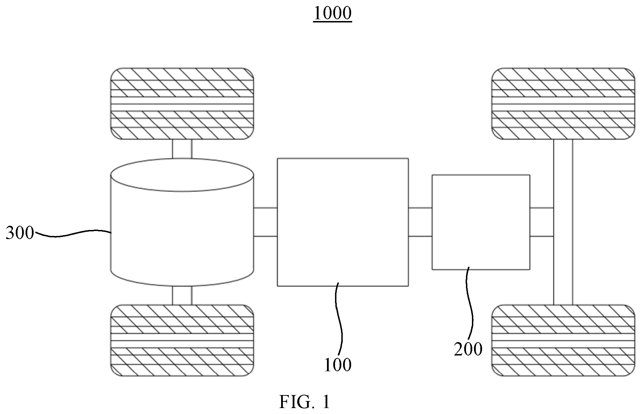

Referring to FIG. 1, FIG. 1 is a schematic structural diagram of a vehicle 1000 according to an embodiment of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is arranged inside the vehicle 1000. The battery 100 may be arranged at a bottom, head, or tail of the vehicle 1000. The battery 100 may be configured to power the vehicle 1000. For example, the battery 100 may be used as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery apparatus 100 may be used not only as the operating power source of the vehicle 1000, but also as a driving power source of the vehicle 1000, instead of or partially instead of fuel or natural gas to provide driving power for the vehicle 1000.

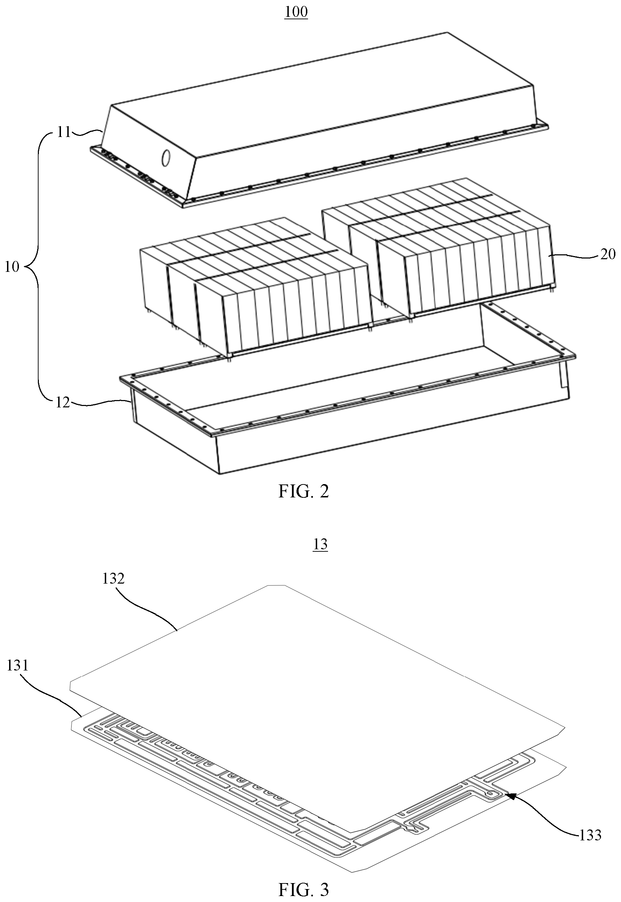

Referring to FIG. 2, FIG.2 is an exploded schematic view of a battery 100 according to an embodiment of the present application. The battery 100 comprises a box body 10 and a battery cell 20. The battery cell 20 is accommodated in the box body 10. Here, the box body 10 is configured to provide an accommodating space for the battery cell 20, and the box body 10 may adopt multiple structures. In some embodiments, the box body 10 may include a first portion 11 and a second portion 12, where the first portion 11 and the second portion 12 cover each other and jointly define an accommodating space for accommodating the battery cell 20. The second portion 12 may be of a hollow structure with an opening at one end, the first portion 11 may be of a plate-shaped structure, and the first portion 11 covers an opening side of the second portion 12, such that the first portion 11 and the second portion 12 jointly define the accommodating space. The first portion 11 and the second portion 12 may each be of a hollow structure with an opening in one side, with the opening side of the first portion 11 covering the opening side of the second portion 12. Certainly, the box body 10 formed by the first portion 11 and the second portion 12 may be in various shapes such as a cylinder and a cuboid.

In some embodiments, the box body 10 may include a frame and a heat exchange assembly 13, the frame is configured to define the accommodating space, the heat exchange assembly 13 is of a plate-shaped structure, and the heat exchange assembly 13 is covered at an opening of the frame and connected to the frame to form the first portion 11 or the second portion 12. The heat exchange assembly 13 is in contact with the battery cell 20 to absorb heat generated by the battery cell 20 or transfer heat to the battery cell 20, thereby adjusting the temperature of the battery cell 20.

In some embodiments, the box body 10 may be used as a part of a chassis structure of the vehicle 1000. For example, a part of the box body 10 may be at least a part of a floor of the vehicle 1000, or a part of the box body 10 may be at least a part of a cross beam and a longitudinal beam of the vehicle 1000.

In the battery 100, if a plurality of battery cells 20 are provided, the plurality of battery cells 20 may be subjected to series connection, parallel connection, or series-parallel connection, and the series-parallel connection means that the plurality of battery cells 20 are subjected to both series connection, and parallel connection. The plurality of battery cells 20 may be directly connected in series, in parallel, or in a combination of both, and the whole of the plurality of battery cells 20 is accommodated in the box body 10. Certainly, the battery 100 may also be formed in a manner that a plurality of battery cells 20 are subjected to series connection, parallel connection, or series-parallel connection to form battery modules, and the plurality of battery modules are then subjected to series connection, parallel connection, or series-parallel connection to form an integrated unit, which is accommodated in the box body 10. The battery 100 may further comprise other structures. For example, the battery 100 may further comprise a busbar component for implementing an electrical connection between the plurality of battery cells 20.

Each battery cell 20 may be a secondary battery or a primary battery, where the secondary battery refers to a battery cell 20 that may be continuously used by activating an active material by means of charging the battery cell after the battery cell 20 is discharged. The primary battery refers to a battery cell 20 that may not be continuously used by activating an active material by means of charging the battery cell after the electric energy of the battery cell 20 is depleted. The battery cell 20 may also be a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a lead storage battery, or the like, which is not limited herein. The battery cell 20 may be a cylindrical battery cell, a prismatic battery cell, a pouch battery cell, or a battery cell 20 of other shapes. The prismatic battery cell comprises a square-housing battery cell, a blade-shaped battery cell, and a multi-prism battery cell, for example, a hexagonal prism battery cell, and the like, which is not particularly limited by the present application.

The battery cell 20 in the embodiments of this application includes an electrode assembly and a housing, and the electrode assembly is mounted in the housing, to protect the electrode assembly by using the housing.

The electrode assembly is also known as a battery cell. The electrode assembly is composed of a positive electrode sheet, a negative electrode sheet and a separator. Working of the battery assembly mainly relies on migration of metal ions between the positive electrode sheet and the negative electrode sheet. The positive electrode sheet includes a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer, and the positive electrode current collector not coated with the positive electrode active substance layer is a positive electrode tab, or a metal conductor is welded and led out from the positive electrode current collector as a positive electrode tab. A lithium-ion battery is used as an example, for which, the positive electrode current collector may be made of aluminum, and the positive electrode active substance may be, but is not limited to, lithium cobalt oxide, lithium iron phosphate, ternary lithium, lithium manganate oxide, or the like.

The negative electrode sheet includes a negative electrode current collector and a negative electrode active substance layer. The negative electrode active substance layer is coated on a surface of the negative electrode current collector. The negative electrode current collector not coated with the negative electrode active substance layer protrudes from the negative electrode current collector coated with the negative electrode active substance layer, and the negative electrode current collector not coated with the negative electrode active substance layer is a negative electrode tab, or a metal conductor is welded and led out from the negative electrode current collector as a negative electrode tab. The negative electrode current collector may be made of copper, and the negative electrode active substance may be carbon, silicon, or the like.

To ensure that a large current passes through without any fusing, a plurality of positive electrode tabs are provided and stacked together, and a plurality of negative electrode tabs are provided and stacked together.

The electrode assembly may be of a winding structure or may be of a laminated structure. The embodiments of the present application include, but are not limited to thereto. In the wound structure, the tabs are welded to the current collector, and then the positive electrode sheet-the separator-the negative electrode sheet-the separator are arranged in sequence. Then, a cylindrical or square battery cell is formed by winding. In the laminated structure, tabs are usually led out from current collectors, and a positive electrode sheet, a negative electrode sheet and a separator are arranged in the order of positive electrode sheet-separator-negative electrode sheet-separator, and are laminated together layer by layer to form a laminated battery cell. The separator may be cut and directly laminated with the separator sheet, or the separator may be folded and laminated in a Z shape without being cut. The separator may be made of polypropylene (PP), polyethylene (PF), or the like. The separator is an insulating film disposed between the positive electrode sheet and the negative electrode sheet, and has main functions of separating the positive electrode and negative electrode and preventing electrons in a battery cell 20 not to freely pass therethrough to prevent a short circuit, but allowing ions in an electrolyte solution to freely pass therethrough to form a circuit between the positive electrode and negative electrode. The positive electrode sheet and the negative electrode sheet are collectively referred to as an electrode sheet. The positive electrode tab and the negative electrode tab are collectively referred to as a tab.

The housing refers to a housing structure having a space therein to accommodate and protect the electrode assembly. The housing may be made of a material having specific hardness and strength, such that the housing is not likely to deform when subjected to compression and impact, enabling the battery cell 20 to have higher structural strength and improved reliability. The housing may be made of copper, iron, aluminum, stainless steel, an aluminum alloy, plastic, and the like.

An electrode terminal is disposed on a housing of the battery cell 20. The electrode terminal refers to a conductive member disposed on the housing, and the electrode terminal is connected to the tab of the electrode assembly to output electric energy of the battery cell 20 or charge the battery cell 20. The battery cell 20 generally has two electrode terminals, the two electrode terminals are respectively connected to the positive electrode tab and the negative electrode tab of the electrode assembly, the electrode terminal connected to the positive electrode tab is a positive electrode terminal, and the electrode terminal connected to the negative electrode tab is a negative electrode terminal.

In some embodiments, the battery cell 20 further includes a pressure relief mechanism, and the pressure relief mechanism is disposed on a housing of the battery cell 20, so that when a temperature or a pressure of the battery cell 20 exceeds a safety threshold, gas or liquid inside the battery cell 20 may be released, to reduce the pressure inside the battery cell 20 and reduce the risk of explosion of the battery cell 20.

To illustrate the technical solution provided by the present application, detailed description is made below in combination with specific drawings and embodiments.

In a first aspect, referring to FIG. 3 to FIG. 10 together, an embodiment of the present application provides a heat exchange assembly 13, and a heat exchange flow channel 133 is formed in the heat exchange assembly 13. The heat exchange assembly 13 includes a first plate body 131 and a second plate body 132, the first plate body 131 includes a first connecting layer member 1311, the second plate body 132 includes a reinforcing layer member 1321 and a second connecting layer member 1322, the reinforcing layer member 1321 and the second connecting layer member 1322 are stacked and connected to each other, and the second connecting layer member 1322 and the first connecting layer member 1311 are stacked and hermetically connected, so as to close the heat exchange flow channel 133.

The first plate body 131 and the second plate body 132 are two main body parts of the heat exchange assembly 13, and the first plate body 131 and the second plate body 132 are stacked and connected to each other, so that the first plate body 131 and the second plate body 132 jointly define a circulation space for circulating the heat exchange medium.

The heat exchange flow channel 133 is configured to provide a flow path of the heat exchange medium, and the heat exchange flow channel 133 may be disposed on a surface, facing the second plate body 132, of the first plate body 131 (that is, a surface of the first connecting layer member 1311 facing the second plate body 132), or may be disposed on a surface, facing the first plate body 131, of the second plate body 132 (that is, a surface, facing the first plate body 131, of the second connecting layer member 1322), or may be disposed on both a surface, facing the second plate body 132, of the first plate body 131 and a surface, facing the first plate body 131, of the second plate body 132.

In some embodiments, a surface, facing the second plate body 132, of the first connecting layer member 1311 is concavely provided with the heat exchange flow channel 133, a surface, facing the first plate body 131, of the second connecting layer member 1322 is a plane, and the second connecting layer member 1322 and the first connecting layer member 1311 are stacked and hermetically connected to close the heat exchange flow channel 133 to form the above-mentioned circulation space.

In some other embodiments, a surface, facing the second plate body 132, of the first connecting layer member 1311 is a plane, a surface, facing the first plate body 131, of the second connecting layer member1322 is concavely provided with a heat exchange flow channel 133, and the second connecting layer member 1322 and the first connecting layer member 1311 are stacked and hermetically connected to close the heat exchange flow channel 133 to form the circulation space.

In still some embodiments, the surface, facing the second plate body 132, of the first connecting layer member 1311 and the surface, facing the first plate body 131, of the second connecting layer member 1322 are each concavely provided with the heat exchange flow channel 133, and the second connecting layer member 1322 and the first connecting layer member 1311 are stacked and hermetically connected to close the heat exchange flow channel 133 on the first plate body 131 and the heat exchange flow channel 133 on the second plate body 132 to form the above-mentioned circulation space, where the heat exchange flow channel 133 on the first connecting layer member 1311 constitutes a part of the above-mentioned circulation space, and the heat exchange flow channel 133 on the second connecting layer member 1322 constitutes another part of the above-mentioned circulation space.

The first connecting layer member 1311 is a layer structure for connecting the second plate body 132, and the first connecting layer member 1311 may constitute the entire first plate body 131, or may be used as an inner layer structure of the first plate body 131. The first connecting layer member 1311 may be made of a metal material. In some embodiments, the first connecting layer member 1311 may be an integral member, that is, the first connecting layer member 1311 is made of one material. In some other embodiments, the first connecting layer member 1311 may include a plurality of layer structures, and materials of the layer structures may be the same or different. The metal material may be, but is not limited to, a 1-series aluminum layer member, a 3-series aluminum layer member, a 4-series aluminum layer member, or the like.

The second connecting layer member 1322 is an inner layer structure of the second plate body 132, and the second connecting layer member 1322 is configured to connect the first plate body 131. In some embodiments, the second connecting layer member 1322 and the reinforcing layer member 1321 are stacked and then combined by a rolling process to form the second plate body 132. Of course, the second connecting layer member 1322 and the reinforcing layer member 1321 may also be connected by welding, bonding, or the like to form the second plate body 132. The second connecting layer member 1322 may be made of a metal material. In some embodiments, the second connecting layer member 1322 may be an integral member, that is, the second connecting layer member 1322 is made of one material. In some other embodiments, the second connecting layer member1322 may include a plurality of layer structures, and the material of each layer structure may be the same or different. The metal material may be, but is not limited to, 1-series aluminum, 3-series aluminum, 4-series aluminum, or the like.

It should be noted that the hermetical connection manner of the first connecting layer member 1311 and the second connecting layer member 1322 may be, but is not limited to, welding or bonding.

In some embodiments, the heat exchange flow channel 133 is stamped and formed on the surface, facing the second plate body 132, of the first connecting layer member 1311 and/or the surface, facing the first plate body 131, of the second connecting layer member 1322, and the second connecting layer member 1322 is welded to the first connecting layer member 1311 to close the heat exchange flow channel 133.

In some other embodiments, the heat exchange flow channel 133 is stamped and formed on the surface, facing the second plate body 132, of the first connecting layer member 1311 and/or the surface, facing the first plate body 131, of the second connecting layer member 1322, and the second connecting layer member 1322 is bonded to the first connecting layer member 1311, to close the heat exchange flow channel 133.

In some other embodiments, the first plate body 131 and the second plate body 132 are connected integrally by a rolling process, and the heat exchange flow channel 133 is formed between the first plate body 131 and the second plate body 132 by an inflation process.

The reinforcing layer member 1321 is an outer layer structure of the second plate body 132. It may be understood that the structural strength of the reinforcing layer member 1321 is greater than the structural strength of the first connecting layer member 1311 and the structural strength of the second connecting layer member 1322. In some embodiments, the reinforcing layer member 1321 is made of a high-strength metal material, which may be, but is not limited to, stainless steel, carbon steel, a 5-series aluminum material, a 6-series aluminum material, a 7-series aluminum material, and the like, and compared with a heat exchange assembly made of a conventional metal material such as a 1-series aluminum material, a 3-series aluminum material, and the like, the structural strength of the reinforcing layer member 1321 is greater, where the structural strength includes, but is not limited to, yield strength, tensile strength, and the like, for example, the yield strength of the reinforcing layer member 1321 is greater than 54 MPa, and the tensile strength of the reinforcing layer member 1321 is greater than 95 MPa.

In some embodiments, on a reference plane perpendicular to the stacking direction of the first plate body 131 and the second plate body 132, at least a part of the projection of the heat exchange flow channel 133 coincides with the projection of the reinforcing layer member 1321, in other words, in the stacking direction of the first plate body 131 and the second plate body 132, at least a part of the heat exchange flow channel 133 is disposed opposite to the reinforcing layer member 1321, for example, on the reference plane perpendicular to the stacking direction of the first plate body 131 and the second plate body 132, the entire projection of the heat exchange flow channel 133 coincides with the projection of the reinforcing layer member 1321. In a case where the portion of the heat exchange flow channel 133 opposite to the reinforcing layer member 1321 is subjected to an external force, the reinforcing layer member 1321 may provide a supporting force to the portion of the heat exchange flow channel 133 opposite to the reinforcing layer member 1321 to resist the external force, thereby reducing the risk of deformation of the heat exchange flow channel 133.

The second plate body 132 of the heat exchange assembly 13 provided in the embodiments of the present application is provided with the reinforcing layer member 1321, the reinforcing layer member 1321 and the second connecting layer member 1322 are stacked and connected, and in a case where the second connecting layer member 1322 is connected to the first connecting layer member 1311, the reinforcing layer member 1321 may provide an additional supporting force for the entire heat exchange assembly 13 to resist an external force, thereby effectively improving the structural strength of the heat exchange assembly 13 and effectively reducing the risk of deformation of the heat exchange assembly 13.

In some embodiments of the present application, the first connecting layer member 1311 is welded to the second connecting layer member 1322.

In the welding process, in order to better close the heat exchange flow channel 133, the first connecting layer member 1311 and the second connecting layer member 1322 may be welded along the edge of the first plate body 131, and the first connecting layer member 1311 and the second connecting layer member 1322 may be welded along the edge of the heat exchange flow channel 133.

In some embodiments, the first connecting layer member 1311 and the second connecting layer member 1322 may be configured according to the actual application.

Of course, in other embodiments, the welding manner of the first connecting layer member 1311 and the second connecting layer member 1322 may also be laser welding, arc welding, or the like.

By adopting the above technical solution, the connection process of the first plate body 131 and the second plate body 132 is effectively simplified, thereby effectively improving the production efficiency of the heat exchange assembly 13.

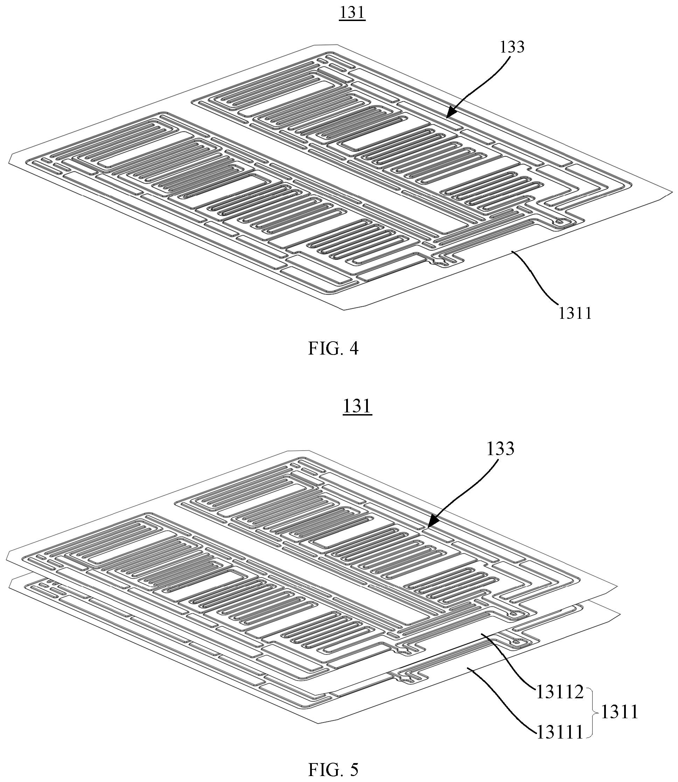

In some embodiments of the present application, referring to FIG. 5, the first connecting layer member 1311 includes a first layer body 13111 and a second layer body 13112 that are stacked and connected, the second layer body 13112 is welded to the second connecting layer member 1322, and a melting point of the second layer body 13112 is less than a melting point of the first layer body 13111.

In other words, in this embodiment, the first connecting layer member 1311 is formed by stacking at least two layer structures. The first layer body 13111 may be used as a base layer structure of the first connecting layer member 1311, and the second layer body 13112 may be used as a connection layer structure for connecting the second plate body 132.

In a case where the first connecting layer member 1311 and the second connecting layer member 1322 are welded, since the melting point of the second layer body 13112 is less than the melting point of the first layer body 13111, the second layer body 13112 is easier to melt than the first layer body 13111, so that the first connecting layer member 1311 can better adapt to the welding temperature, thereby effectively improving the welding effect between the first plate body 131 and the second plate body 132.

In some embodiments of the present application, the first layer body 13111 is a 3-series aluminum layer body or a 1-series aluminum layer body, and the second layer body 13112 is a 4-series aluminum layer body.

In the related art, the melting point of 4-series aluminum is lower than the melting point of 1-series aluminum and the melting point of 3-series aluminum.

By adopting the above technical solution, the first connecting layer member 1311 can be better adapted to the welding temperature, thereby further improving the welding effect between the first plate body 131 and the second plate body 132.

In some embodiments, the first layer body 13111 has a thickness of 0.1 mm to 0.85 mm.

The thickness of the first layer body 13111 refers to the dimension of the first layer body 13111 along the stacking direction of the first connecting layer member 1311 and the second connecting layer member 1322, and the thickness of each part of the first layer body 13111 may be the same or different, it should be noted that in a case where the first layer body 13111 has at least two parts with different thicknesses, the thickness of each part of the first layer body 13111 is within the range of 0.1 mm to 0.85 mm.

In a case where the first connecting layer member 1311 includes the first layer body 13111 and the second layer body 13112, the first layer body 13111 is a 3-series aluminum layer body or a 1-series aluminum layer body, and the second layer body 13112 is a 4-series aluminum layer body, the first layer body 13111 has a thickness of 0.1 mm to 0.85 mm, that is, the first layer body 13111 has the minimum thickness of 0.1 mm, so as to reduce the risk of the first layer body 13111 being welded through during the welding process. The thickness of the first layer body 13111 may be determined according to actual application requirements, and may be specifically 0.1 mm, 0.2 mm, 0.3 mm, 0.4 mm, 0.5 mm, 0.6 mm, 0.7 mm, 0.8 mm, 0.85 mm, or the like.

By adopting the above technical solution, the risk of the first connecting layer member 1311 being welded through is effectively reduced, thereby effectively reducing the risk of the reinforcing layer member 1321 being in contact with the heat exchange medium, and effectively improving the corrosion of the reinforcing layer member 1321.

Of course, on the other hand, in a case where the first connecting layer member 1311 includes the first layer body 13111 and the second layer body 13112, the first layer body 13111 is a 3-series aluminum layer body or a 1-series aluminum layer body, and the second layer body 13112 is a 4-series aluminum layer body, the maximum thickness of the first layer body 13111 is defined as 0.85 mm, so that the heat exchange assembly 13 does not greatly increase in weight and volume due to the excessive thickness of the first connecting layer member 1311, thereby effectively improving the energy density of the battery 100 adopting the above heat exchange assembly 13.

In some embodiments, the second layer body 13112 has a thickness of 0.05 mm to 0.1 mm.

The thickness of the second layer body 13112 refers to the dimension of the second layer body 13112 along the stacking direction of the first connecting layer member 1311 and the second connecting layer member 1322 before the first connecting layer member 1311 and the second connecting layer member 1322 are welded, and the thickness of each part of the second layer body 13112 may be the same or different, it should be noted that in a case where the second layer body 13112 has at least two parts with different thicknesses, the thickness of each part of the second layer body 13112 is in the range of 0.05 mm to 0.1 mm.

In a case where the first connecting layer member 1311 includes the first layer body 13111 and the second layer body 13112, the first layer body 13111 is a 3-series aluminum layer body or a 1-series aluminum layer body, and the second layer body 13112 is a 4-series aluminum layer body, the second layer body 13112 has a thickness of 0.05 mm to 0.1 mm, that is, the second layer body 13112 has the minimum thickness of 0.05 mm, so that after the second layer body 13112 is melted, the welding portion between the first plate body 131 and the second plate body 132 can have a sufficient penetration depth. The thickness of the second layer 13112 may be determined according to actual application requirements, and may be specifically 0.05 mm, 0.06 mm, 0.07 mm, 0.08 mm, 0.09 mm, 0.1 mm, or the like.

By adopting the above technical solution, the requirement of the penetration depth required for welding the first plate body 131 and the second plate body 132 may be met, thereby effectively improving the welding effect between the first plate body 131 and the second plate body 132.

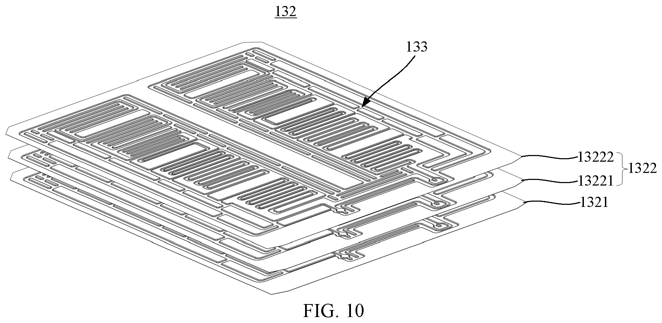

In some embodiments of the present application, referring to FIG. 10, the second connecting layer member 1322 includes a third layer body 13221 and a fourth layer body 13222 that are stacked and connected, the fourth layer body 13222 is welded to the first connecting layer member 1311, and a melting point of the fourth layer body 13222 is lower than a melting point of the third layer body 13221.

In other words, in the present embodiment, the second connecting layer member 1322 is formed by stacking at least two layer structures. The third layer body 13221 may be used as a base layer structure of the second connecting layer member 1322, and the fourth layer body 13222 may be used as a connecting layer structure for connecting the first plate body 131.

In a case where the second connecting layer member 1322 is welded to the first connecting layer member 1311, since the melting point of the fourth layer body 13222 is lower than the melting point of the third layer body 13221, the fourth layer body 13222 is easier to melt than the third layer body 13221, so that the second connecting layer member 1322 may better adapt to the welding temperature, thereby effectively improving the welding effect between the first plate body 131 and the second plate body 132.

In some embodiments of the present application, the third layer body 13221 is a 3-series aluminum layer body or a 1-series aluminum layer body, and the fourth layer body 13222 is a 4-series aluminum layer body.

In the related art, the melting point of 4-series aluminum is lower than the melting point of 1-series aluminum and the melting point of 3-series aluminum.

By adopting the above technical solution, the second connecting layer member 1322 may be better adapted to the welding temperature, thereby further improving the welding effect between the first plate body 131 and the second plate body 132.

In some embodiments of the present application, the third layer body 13221 has a thickness of 0.1 mm to 0.85 mm.

The thickness of the third layer body 13221 refers to the dimension of the third layer body 13221 along the stacking direction of the first connecting layer member 1311 and the second connecting layer member 1322, and the thickness of each part of the third layer body 13221 may be the same or different, it should be noted that in a case where the third layer body 13221 has at least two parts with different thicknesses, the thickness of each part of the third layer body 13221 is within the range of 0.1 mm to 0.85 mm.

In a case where the second connecting layer member 1322 includes the third layer body 13221 and the fourth layer body 13222, the third layer body 13221 is a 3-series aluminum layer body or a 1-series aluminum layer body, and the fourth layer body 13222 is a 4-series aluminum layer body, the third layer body 13221 has a thickness of 0.1 mm to 0.85 mm, that is, the third layer body 13221 has the minimum thickness of 0.1 mm, so as to reduce the risk of the third layer body 13221 being welded through during the welding process. The thickness of the third layer body 13221 may be determined according to actual application requirements, and may be specifically 0.1 mm, 0.2 mm, 0.3 mm, 0.4 mm, 0.5 mm, 0.6 mm, 0.7 mm, 0.8 mm, 0.85 mm, or the like.

By adopting the above technical solution, the risk of the second connecting layer member 1322 being welded through is effectively reduced, thereby effectively reducing the risk of the reinforcing layer member 1321 being in contact with the heat exchange medium, and effectively improving the situation that the reinforcing layer member 1321 is corroded.

Of course, on the other hand, in a case where the second connecting layer member 1322 includes the third layer body 13221 and the fourth layer body 13222, the third layer body 13221 is a 3-series aluminum layer body or a 1-series aluminum layer body, and the fourth layer body 13222 is a 4-series aluminum layer body, the maximum thickness of the third layer body 13221 is defined as 0.85 mm, so that the heat exchange assembly 13 does not greatly increase in weight and volume due to the excessive thickness of the second connecting layer member 1322, thereby effectively improving the energy density of the battery 100 adopting the above heat exchange assembly 13.

In some embodiments of the present application, the fourth layer body 13222 has a thickness of 0.05 mm to 0.1 mm.

The thickness of the fourth layer body 13222 refers to the dimension of the fourth layer body 13222 along the stacking direction of the first connecting layer member 1311 and the second connecting layer member 1322 before the first connecting layer member 1311 and the second connecting layer member 1322 are welded, and the thickness of each part of the fourth layer body 13222 may be the same or different, it should be noted that in a case where the fourth layer body 13222 has at least two parts with different thicknesses, the thickness of each part of the fourth layer body 13222 is within the range of 0.05 mm to 0.1 mm.

In a case where the second connecting layer member 1322 includes the third layer body 13221 and the fourth layer body 13222, the third layer body 13221 is a 3-series aluminum layer body or a 1-series aluminum layer body, and the fourth layer body 13222 is a 4-series aluminum layer body, the fourth layer body 13222 has a thickness of 0.05 mm to 0.1 mm, that is, the fourth layer body 13222 has the minimum thickness of 0.05 mm, so that after the fourth layer body 13222 is melted, the welding portion between the first plate body 131 and the second plate body 132 may have a sufficient penetration depth. The thickness of the fourth layer 13222 may be determined according to actual application requirements, and may be specifically 0.05 mm, 0.06 mm, 0.07 mm, 0.08 mm, 0.09 mm, 0.1 mm, or the like.

By adopting the above technical solution, the requirement of the penetration depth required for welding the first plate body 131 and the second plate body 132 may be met, thereby effectively improving the welding effect between the first plate body 131 and the second plate body 132.

In some embodiments, referring to FIG. 5 and FIG. 10 together, the first plate body 131 includes a first connecting layer member 1311, the first connecting layer member 1311 forms the entire first plate body 131, the first connecting layer member 1311 includes a first layer body 13111 and a second layer body 13112, the first layer body 13111 and the second layer body 13112 are stacked and connected, the first layer body 13111 is a 1-series aluminum layer member or a 3-series aluminum layer member, the second layer body 13112 is a 4-series aluminum layer member, the second plate body 132 includes a reinforcing layer member 1321 and a second connecting layer member 1322, the reinforcing layer member 1321 and second connecting layer member 1322 are stacked and connected, the second connecting layer member 1322 includes a third layer body 13221 and a fourth layer body 13222, the third layer body 13221 and the fourth layer body 13222 are stacked and connected, the third layer body 13221 is a 1-series aluminum layer member or a 3-series aluminum layer member, the fourth layer body 13222 is a 4-series aluminum layer member, and the second layer body 13112 is hermetically connected to the fourth layer body 13222.

In some other embodiments, referring to FIG. 4 and FIG. 10 together, the first plate body 131 includes a first connecting layer member 1311, the first connecting layer member 1311 forms the entire first plate body 131, the first connecting layer member 1311 is an integral member and the first connecting layer member 1311 is a 1-series aluminum layer member or a 3-series aluminum layer member, the second plate body 132 includes a reinforcing layer member 1321 and a second connecting layer member 1322, the reinforcing layer member 1321 and the second connecting layer member 1322 are stacked and connected, the second connecting layer member 1322 includes a third layer body 13221 and a fourth layer body 13222, the third layer body 13221 and the fourth layer body 13222 are stacked and connected, the third layer body 13221 is a 1-series aluminum layer member or a 3-series aluminum layer member, the fourth layer body 13222 is a 4-series aluminum layer member, and the fourth layer body 13222 is hermetically connected to the first connecting layer member 1311.

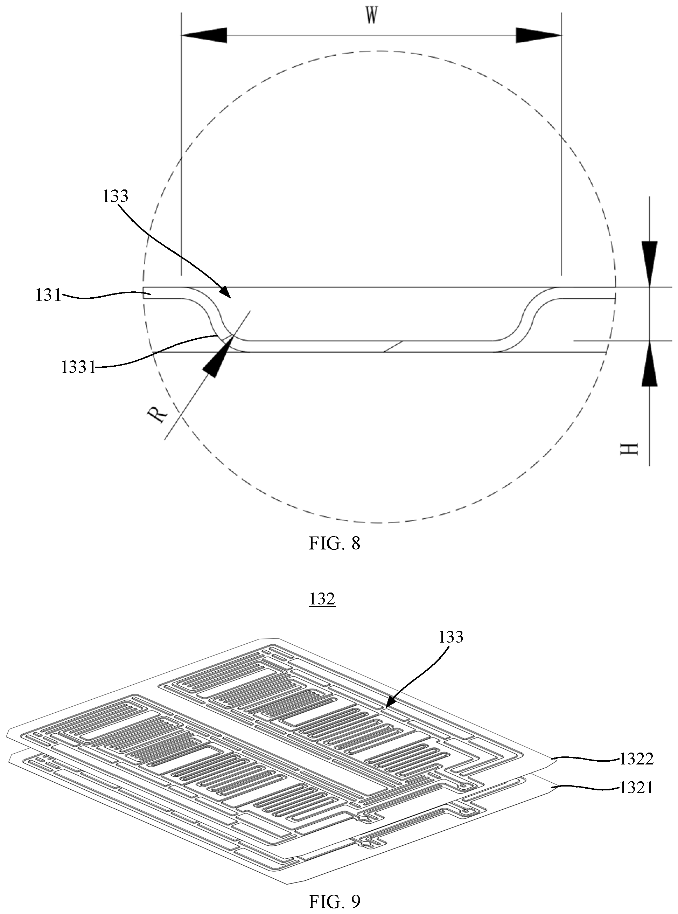

In still some embodiments, referring to FIG. 4 and FIG. 9 together, the first plate body 131 includes a first connecting layer member 1311, the first connecting layer member 1311 forms the entire first plate body 131, the first connecting layer member 1311 is an integral member and the first connecting layer member 1311 is a 1-series aluminum layer member or a 3-series aluminum layer member, the second plate body 132 includes a reinforcing layer member 1321 and a second connecting layer member 1322, the reinforcing layer member 1321 and the second connecting layer member 1322 are stacked and connected, the second connecting layer member 1322 is an integral member and is a 1-series aluminum layer member or a 3-series aluminum layer member, and the second connecting layer member 1322 is hermetically connected to the first connecting layer member 1311.

In some embodiments of the present application, the reinforcing layer member 1321 includes at least one of a stainless steel layer member, a carbon steel layer, a 5-series aluminum layer member, a 6-series aluminum layer member, and a 7-series aluminum layer member.

By adopting the above technical solution, the heat exchange assembly 13 may meet the requirements of yield strength and tensile strength, thereby further reducing the risk of deformation of the heat exchange assembly 13.

In some embodiments of the present application, the reinforcing layer member 1321 has a thickness of 0.1 mm to 0.8 mm.

The thickness of the reinforcing layer member 1321 refers to the dimension of the reinforcing layer member 1321 along the stacking direction of the first connecting layer member 1311 and the second connecting layer member 1322, and the thickness of each part of the reinforcing layer member 1321 may be the same or different, it should be noted that in a case where the reinforcing layer member 1321 has at least two parts with different thicknesses, the thickness of each part of the reinforcing layer member 1321 is within the range of 0.1 mm to 0.8 mm. The thickness of the reinforcing layer member 1321 may be determined according to actual application requirements, and may be specifically 0.1 mm, 0.2 mm, 0.3 mm, 0.4 mm, 0.5 mm, 0.6 mm, 0.7 mm, 0.8 mm, or the like.

The minimum thickness of the reinforcing layer member 1321 is 0.1 mm, so that the heat exchange assembly 13 meets the strength requirements, and the maximum thickness of the reinforcing layer member 1321 is 0.8 mm, which may optimize the weight and volume of the heat exchange assembly 13, thereby effectively improving the energy density of the battery 100 using the above heat exchange assembly 13.

In some embodiments of the present application, a first anti-corrosion layer (not shown in the figure) is disposed on a surface, facing the second plate body 132, of the first plate body 131.

In some other embodiments of the present application, a second anti-corrosion layer (not shown in the figure) is disposed on a surface, facing the first plate body 131, of the second plate body 132.

In still other embodiments of the present application, a first anti-corrosion layer is disposed on a surface, facing the second plate body 132, of the first plate body 131, and a second anti-corrosion layer is disposed on a surface, facing the first plate body 131, of the second plate body 132.

The first anti-corrosion layer and the second anti-corrosion layer are layer structures having an anti-corrosion function, and are used to improve the corrosion of the first plate body 131 and the second plate body 132 by the heat exchange medium. The first anti-corrosion layer may be disposed on the surface, facing the second plate body 132, of the first plate body 131 by using a method such as an electroplating process, a plastic spraying process, or a coating process, and similarly, the second anti-corrosion layer may be disposed on the surface, facing the first plate body 131, of the second plate body 132 by using a method such as an electroplating process, a plastic spraying process, or a coating process. The first anti-corrosion layer and the second anti-corrosion layer may be, but are not limited to, a nickel layer, an aluminum-silicon layer, a zinc-nickel layer, or the like.

By adopting the above technical solution, the risk of the first plate body 131 and the second plate body 132 contacting the heat exchange medium is effectively reduced, thereby effectively improving the situation that the first plate body 131 and the second plate body 132 are corroded by the heat exchange medium.

In some embodiments of the present application, a first heat-resistant layer (not shown) is disposed on a surface, facing the second plate body 132, of the first plate body 131.

In some other embodiments of the present application, a second heat-resistant layer (not shown in the figure) is disposed on a surface, facing the first plate body 131, of the second plate body 132.

In some other embodiments of the present application, a first heat-resistant layer is disposed on a surface, facing the second plate body 132, of the first plate body 131, and a second heat-resistant layer is disposed on a surface, facing the first plate body 131, of the second plate body 132.

The first heat-resistant layer and the second heat-resistant layer are layer structures having a heat insulation function, and are used to reduce heat transfer to the inside of the first plate body 131 and the inside of the second plate body 132, thereby reducing the risk of delamination of the first plate body 131 and the second plate body 132. The first heat-resistant layer may be disposed on the surface, facing the second plate body 132, of the first plate body 131 by using a method such as an electroplating process, a plastic spraying process, or a coating process, and similarly, the second heat-resistant layer may be disposed on the surface, facing the first plate body 131, of the second plate body 132 by using a method such as an electroplating process, a plastic spraying process, or a coating process.

In some embodiments, the first heat-resistant layer and the first anti-corrosion layer are of a composite layer structure, and the second heat-resistant layer and the second anti-corrosion layer are of a composite layer structure. In other words, the composite layer structure has both a heat-resistant function and an anti-corrosion function.

By adopting the above technical solution, in a case where the first plate body 131 and the second plate body 132 are welded, heat may be blocked from being transferred from the surface of the first plate body 131 facing the second plate body 132 to each layer structure of the first plate body 131 and from the surface of the second plate body 132 facing the first plate body 131 to each layer structure of the second plate body 132, thereby effectively improving the thermal expansion of the first plate body 131 and the second plate body 132, and effectively reducing the risk of delamination of the first plate body 131 and the second plate body 132.

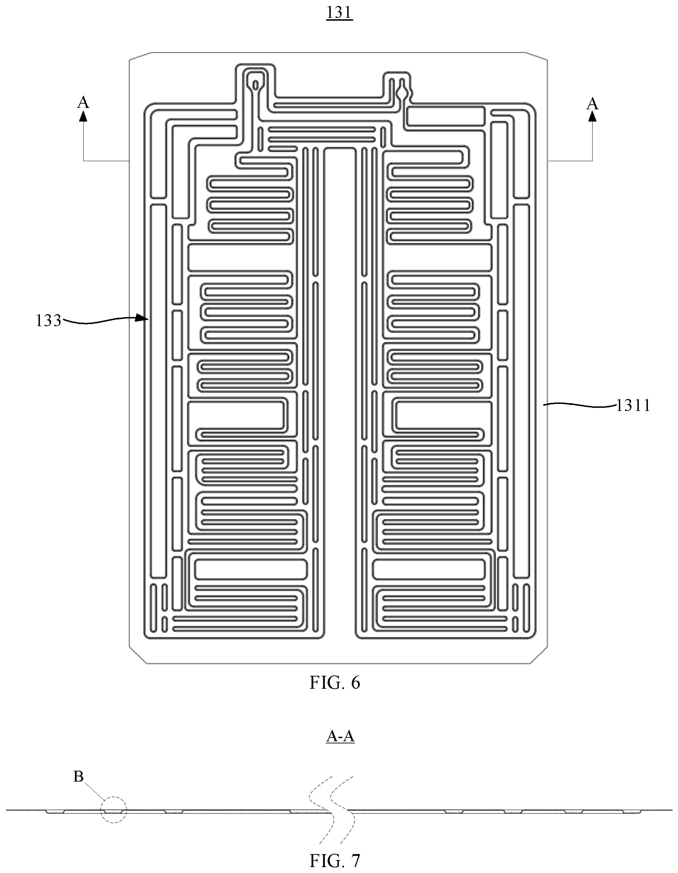

In some embodiments of the present application, referring to FIG. 6 to FIG. 8 together, the heat exchange flow channel 133 has a depth H of 3 mm to 3.5 mm.

The depth H of the heat exchange flow channel 133 refers to the size of the heat exchange flow channel 133 along the stacking direction of the first connecting layer member 1311 and the second connecting layer member 1322. The depth H of the heat exchange flow channel 133 may be determined according to actual application requirements, and may be specifically 3 mm, 3.1 mm, 3.2 mm, 3.3 mm, 3.4 mm, 3.5 mm, or the like.

In the related art, if the depth H of the heat exchange flow channel 133 is too large, the heat exchange assembly 13 is prone to cracking during the molding process of the heat exchange flow channel 133, and by adopting the above technical solution, the risk of cracking of the heat exchange assembly 13 during the molding process of the heat exchange flow channel 133 is effectively reduced.

In some embodiments of the present application, referring to FIG. 6 to FIG. 8 together, the heat exchange flow channel 133 has a width W of 3 mm to 5 mm.

The width W of the heat exchange flow channel 133 refers to the dimension of the heat exchange flow channel 133 in a direction perpendicular to the stacking direction of the first connecting layer member 1311 and the second connecting layer member 1322 and an extending direction of the heat exchange flow channel 133. The width W of the heat exchange flow channel 133 may be determined according to actual application requirements, and may be specifically 3 mm, 3.1 mm, 3.2 mm, 3.3 mm, 3.4 mm, 3.5 mm, or the like.

In the related art, if the width W of the heat exchange flow channel 133 is too large, the heat exchange assembly 13 is prone to cracking during the molding process of the heat exchange flow channel 133, and by adopting the above technical solution, the risk of cracking of the heat exchange assembly 13 during the molding process of the heat exchange flow channel 133 is effectively reduced.

In some embodiments of the present application, referring to FIG. 6 to FIG. 8 together, a wall body of the heat exchange flow channel 133 is provided with a corner portion 1331, and the corner portion 1331 is of a rounded corner structure.

It should be noted that, in a case where the heat exchange flow channel 133 is disposed on the surface, facing the second plate body 132, of the first plate body 131, the corner portion 1331 may be a portion of the first plate body 131 for connecting a side wall of the heat exchange flow channel 133 and a bottom wall of the first plate body 131, or may be a portion of the first plate body 131 for connecting the side wall of the heat exchange flow channel 133 and a top wall of the first plate body 131, where the bottom wall of the first plate body 131 refers to the wall of the first plate body 131 farthest from the second plate body 132 along the stacking direction of the first connecting layer member 1311 and the second connecting layer member 1322, that is, the bottom wall of the heat exchange flow channel 133, and the top wall of the first plate body 131 refers to the wall of the first plate body 131 closest to the second plate body 132 along the stacking direction of the first connecting layer member 1311 and the second connecting layer member 1322. In a case where the heat exchange flow channel 133 is disposed on the surface, facing the first plate body 131, of the second plate body 132, the corner portion 1331 may be a portion of the second plate body 132 for connecting the side wall of the heat exchange flow channel 133 and the bottom wall of the second plate body 132, or may be a portion of the second plate body 132 for connecting the side wall of the heat exchange flow channel 133 and the top wall of the second plate body 132, where the bottom wall of the second plate body 132 refers to the wall of the second plate body 132 farthest from the first plate body 131 along the stacking direction of the first connecting layer member 1311 and the second connecting layer member 1322, that is, the bottom wall of the heat exchange flow channel 133, and the top wall of the second plate body 132 refers to the wall of the second plate body 132 closest to the first plate body 131 along the stacking direction of the first connecting layer member 1311 and the second connecting layer member 1322.

By adopting the above technical solution, the stress borne by the heat exchange assembly 13 during the molding process of the heat exchange flow channel 133 is effectively reduced, thereby effectively reducing the risk of cracking of the heat exchange assembly 13.

In some embodiments of the present application, referring to FIG. 6 to FIG. 8 together, a radius R of the rounded corner structure is 2 mm to 8 mm.

The radius R of the rounded corner structure may be determined according to actual application requirements, and may be specifically 2 mm, 3 mm, 4 mm, 5 mm, 6 mm, 7 mm, 8 mm, or the like.

By adopting the above technical solution, the risk of cracking of the heat exchange assembly 13 during the molding process of the heat exchange flow channel 133 is further reduced.

In a second aspect, referring to FIG. 2, an embodiment of the present application further provides a box body 10, including a frame and the heat exchange assembly 13 according to any one of the above embodiments, where the frame is connected to the heat exchange assembly 13 to define an accommodating space for accommodating the battery cell 20.

Since the box body 10 provided by the embodiment of the present application adopts the heat exchange assembly 13 according to any one of the above embodiments, the structural strength of the box body 10 is effectively improved.

In some embodiments of the present application, the reinforcing layer member 1321 is connected to the frame.

The connection mode between the reinforcing layer member 1321 and the frame may be, but is not limited to, welding, bonding, fastening, clamping, and the like.

By adopting the above technical solution, the connection strength between the heat exchange assembly 13 and the frame is effectively improved.

In some embodiments of the present application, the reinforcing layer member 1321 is welded to the frame, and a material of the reinforcing layer member 1321 is the same as a material of the frame.

In some embodiments, the reinforcing layer member 1321 is a steel layer member, the frame is a steel frame, and the reinforcing layer member 1321 is welded to the frame.

By adopting the above technical solution, not only the connection strength between the heat exchange assembly 13 and the frame is further improved, but also the connection process between the heat exchange assembly 13 and the frame is effectively simplified, thereby effectively improving the production efficiency of the heat exchange assembly 13.

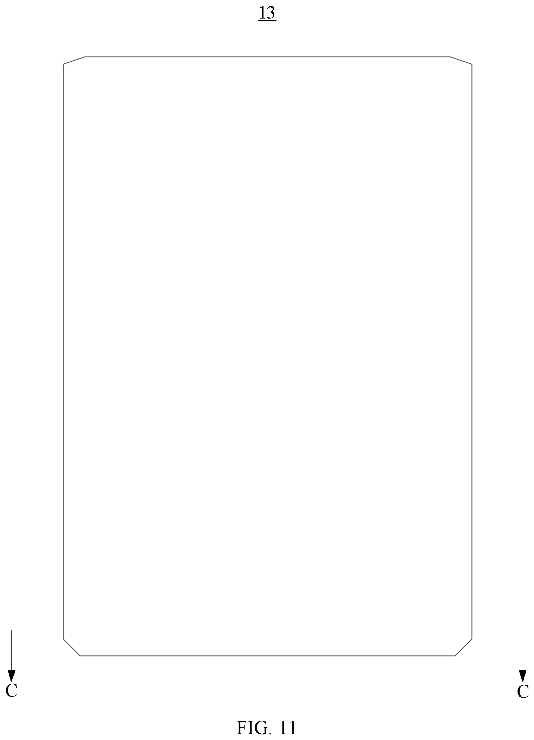

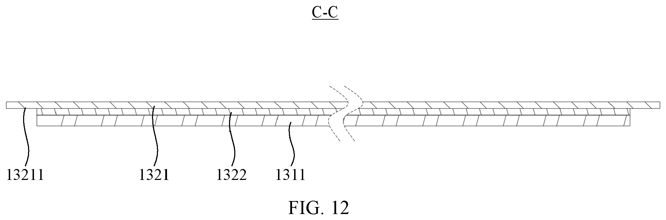

In some embodiments of the present application, referring to FIG. 11 and FIG. 12 together, at least a part of the reinforcing layer member 1321 extends out of an edge side of the first connecting layer member 1311 and an edge side of the second connecting layer member 1322 to form a welding portion 13211, and a side, facing the first plate body 131, of the welding portion 13211 is welded to the frame.

In some embodiments, two opposite sides of the reinforcing layer member 1321 extend out of an edge side of the first connecting layer member 1311 and an edge side of the second connecting layer member1322 to form two welding portions 13211, and the two welding portions 13211 are welded to the frame.

In some other embodiments, a peripheral side of the reinforcing layer member 1321 extends out of the side of the first connecting layer member 1311 and the side of the second connecting layer member 1322 to form a welding portion 13211 in an annular structure, and the welding portion 13211 is welded to the frame.

It should be noted that the side of the first connecting layer member 1311 and the side of the second connecting layer member 1322 may be peeled off, so that the side portion of the reinforcing layer member 1321 extends out of the side of the first connecting layer member 1311 and the side of the second connecting member 1322 to form the welding portion 13211.

By adopting the above technical solution, it is convenient to connect the heat exchange assembly 13 to the frame.

In a third aspect, referring to FIG. 2, an embodiment of the present application further provides a battery 100, including a battery cell 20 and the box body 10 according to any one of the above embodiments, the battery cell 20 is accommodated in the accommodating space, and the heat exchange assembly 13 is configured to adjust the temperature of the battery cell 20.

Since the battery 100 provided by the embodiment of the present application adopts the box body 10 according to any one of the above embodiments, the structural strength of the battery 100 is effectively improved.

In a fourth aspect, referring to FIG. 1, the present application further provides an electric device, including the above battery 100.

Since the electric device provided by the embodiment of the present application adopts the battery 100, the structural strength of the electric device is effectively improved.

The above are only the preferred embodiments of the present application and are not intended to limit the present application. Any modifications, equivalent replacements, improvements, etc. made within the spirit and principles of the present application shall be included in the scope of protection of the present application.

## Claims

1. A heat exchange assembly, wherein a heat exchange flow channel is formed in the heat exchange assembly, and the heat exchange assembly comprises:
a first plate body, comprising a first connecting layer member; and
a second plate body, comprising a reinforcing layer member and a second connecting layer member, wherein the reinforcing layer member and the second connecting layer member are stacked and connected to each other, and the second connecting layer member and the first connecting layer member are stacked and hermetically connected to each other, so as to close the heat exchange flow channel.

2. The heat exchange assembly according to claim 1, wherein the first connecting layer member is welded to the second connecting layer member.

3. The heat exchange assembly according to claim 2, wherein the first connecting layer member comprises a first layer body and a second layer body that are stacked and connected, the second layer body is welded to the second connecting layer member, and a melting point of the second layer body is lower than a melting point of the first layer body.

4. The heat exchange assembly according to claim 3, wherein the first layer body is a 3-series aluminum layer body or a 1-series aluminum layer body, and the second layer body is a 4-series aluminum layer body.

5. The heat exchange assembly according to claim 3 or 4, wherein the first layer body has a thickness of 0.1 mm to 0.85 mm.

6. The heat exchange assembly according to any one of claims 3 to 5, wherein the second layer body has a thickness of 0.05 mm to 0.1 mm.

7. The heat exchange assembly according to any one of claims 2 to 6, wherein the second connecting layer member comprises a third layer body and a fourth layer body that are stacked and connected, the fourth layer body is welded to the first connecting layer member, and a melting point of the fourth layer body is lower than a melting point of the third layer body.

8. The heat exchange assembly according to claim 7, wherein the third layer body is a 3-series aluminum layer body or a 1-series aluminum layer body, and the fourth layer body is a 4-series aluminum layer body.

9. The heat exchange assembly according to claim 7 or 8, wherein the third layer body has a thickness of 0.1 mm to 0.85 mm.

10. The heat exchange assembly according to any one of claims 7 to 9, wherein the fourth layer body has a thickness of 0.05 mm to 0.1 mm.

11. The heat exchange assembly of any one of claims 1 to 10, wherein the reinforcing layer member comprises at least one of a stainless steel layer member, a carbon steel layer member, a 5-series aluminum layer member, a 6-series aluminum layer member, and a 7-series aluminum layer member.

12. The heat exchange assembly according to claim 11, wherein the reinforcing layer member has a thickness of 0.1 mm to 0.8 mm.

13. The heat exchange assembly according to any one of claims 1 to 12, wherein
a first anti-corrosion layer is disposed on a surface, facing the second plate body, of the first plate body; and/or
a second anti-corrosion layer is disposed on a surface, facing the first plate body, of the second plate body.

14. The heat exchange assembly according to any one of claims 1 to 13, wherein
a first heat-resistant layer is disposed on the surface, facing the second plate body, of the first plate body; and/or
a second heat-resistant layer is disposed on the surface, facing the first plate body, of the second plate body.

15. The heat exchange assembly according to any one of claims 1 to 14, wherein the heat exchange flow channel has a depth of 3 mm to 3.5 mm.

16. The heat exchange assembly according to any one of claims 1 to 15, wherein the heat exchange flow channel has a width of 3 mm to 5 mm.

17. The heat exchange assembly according to any one of claims 1 to 16, wherein a wall body of the heat exchange flow channel has a corner portion, and the corner portion is of a rounded corner structure.

18. The heat exchange assembly according to claim 17, wherein a radius of the rounded corner structure is 2 mm to 8 mm.

19. A box body, comprising a frame and the heat exchange assembly according to any one of claims 1 to 18, wherein the frame is connected to the heat exchange assembly to define an accommodating space for accommodating a battery cell.

20. The box body according to claim 19, wherein the reinforcing layer member is connected to the frame.

21. The box body according to claim 20, wherein the reinforcing layer member is welded to the frame, and a material of the reinforcing layer member is the same as a material of the frame.

22. The box body according to claim 21, wherein at least a part of the reinforcing layer member extends out of an edge side of the first connecting layer member and an edge side of the second connecting layer member to form a welding portion, and a side, facing the first plate body, of the welding portion is welded to the frame.

23. A battery, comprising a battery cell and the box body according to any one of claims 19 to 22, wherein the battery cell is accommodated in the accommodating space, and the heat exchange assembly is configured to adjust a temperature of the battery cell.

24. An electric device, comprising the battery according to claim 23.
